# EUROPÄISCHE PATENTSCHRIFT

(11) **EP 1 926 927 B1**
(45) Veröffentlichungstag und Bekanntmachung des Hinweises auf die Patenterteilung: **03.03.2010**
(21) Anmeldenummer: 06806787.5
(22) Anmeldetag: 20.09.2006
(51) Int. Cl.: F16J 15/08, F01D 9/04, F01D 9/02

(54) **HOCHTEMPERATURFESTE DICHTUNGSANORDNUNG, INSBESONDERE FÜR GASTURBINEN**
HIGH TEMPERATURE-RESISTANT SEALING ASSEMBLY, ESPECIALLY FOR GAS TURBINES
GARNITURE D'ETANCHEITE RESISTANT AUX TEMPERATURES ELEVEES, CONÇUE EN PARTICULIER POUR DES TURBINES A GAZ

(30) Priorität: 22.09.2005 EP 05020691
(43) Veröffentlichungstag der Anmeldung: 04.06.2008
(73) Patentinhaber: SIEMENS AKTIENGESELLSCHAFT, 80333 München (DE)
(72) Erfinder: BUCHAL, Tobias, 40489 Düsseldorf (DE); FRANK, Gregor, 45127 Essen (DE); GRUSCHKA, Uwe, 41564 Kaarst (DE); KRÜTZFELDT, Joachim, 45481 Mülheim (DE); ROGOS, Kai-Uwe, 45473 Mülheim (DE); SCHABERG, Axel, 59302 Oelde (DE)
(86) Internationale Anmeldenummer: PCT/EP2006/066558
(87) Internationale Veröffentlichungsnummer: WO 2007/033974

(56) Entgegenhaltungen:
- EP-A- 0 239 020
- EP-A- 0 616 112
- EP-A- 1 146 203
- WO-A-98/16764
- FR-A- 2 422 037
- GB-A- 2 303 888
- US-B1- 6 450 762

## Beschreibung

Die Erfindung betrifft eine hochtemperaturfeste Dichtungsanordnung mit einem Dichtungssegment und einem mit dem Dichtungssegment verbundenen Bauteilabschluss. Die hochtemperaturfeste Dichtungsanordnung soll in einer Brennkammer für Gasturbinen einsetzbar sein.

Die DE 10 2004 002 888 A1 weist eine Gasturbinen-Endrohrdichtung auf, die einen Raum zwischen einem Endrohr und einem Verbrennungsgas-Ringraum abdichtet. In dem Ringraum bildet sich ein Heißgasstrom aus, der anschließend in die Turbine strömt. Der Ringraum zeigt dabei einen Querschnitt auf, der sich in Turbinenrichtung (stromabwärts) vergrößert. Dadurch reduziert sich der Verschleiß des turbinenumhüllenden Gehäuses durch wiederholte thermische Ausdehnung. Hinsichtlich der Verbindung zwischen Brennkammer-Rohrende und Ringraum offenbart die DE 10 2004 002 888 A1 bei dem Brennraum einen Flansch und bei dem Ringraum eine dazu korrespondierende u-förmige Nut. Zum Verbinden der Brennkammer mit dem Ringraum wird der Flansch in die Nut gesteckt (Steckverbindung). Das Brennkammerende ist mit dem Verbrennungsgas-Ringraum über eine Endrohrdichtung verbunden. Dabei ist die Rille bzw. Nut mit einem U-förmigen Querschnitt in einem Endabschnitt der Endrohrdichtung ausgebildet. Der Flansch des Brennkammerendes ist in die Rille bzw. Nut eingesetzt.

Die JP 2004301115 A offenbart hinsichtlich der Verbindung der Brennkammer mit einem Ringraum ebenfalls ein Stecksystem. Auch hier wird am Brennkammer-Rohrende ein Flansch oder eine flanschähnliche Anbindung ausgebildet. Der Ringraum weist ebenfalls eine Nut auf. Zum Verbinden der Brennkammer mit dem Ringraum wird der Flansch in die Nut gesetzt. Zusätzlich sind die beiden Bauteile noch mit einer Schraubverbindung aneinander befestigt.

In dem Dokument WO 98/16764 ist eine Can-Brennkammer offenbart, bei der ein Brenner, mit einem Übergangsrohr verbunden ist. Dabei überlappen der Ausgang des Brenners und der Eingang des Übergangsrohres (siehe Figuren 1 und 2A). In dem sich überlappenden Verbindungsbereich sind Bürstendichtungen angebracht. WO98/16764 weist einen Spring Clip(= flexibles Dichtelement 20,21,22) auf, der teilweise der direkten Heißgasbeaufschlagung augesetzt ist und zudem eine Prallkühlung aufweist.

Bei den im Stand der Technik aufgezeigten Verbindungen zwischen Brennkammer und einem angrenzenden Dichtungssegment, beispielsweise eines Ringraums, zur Überführung des Heißgases zu einer Turbine handelt es sich um eine ineinander greifende Blechkonstruktionen. Diese weist eine Nut am Dichtungssegment sowie einen Flansch am Brennkammer-Rohrende auf, welche zur Befestigung direkt ineinander gesteckt sind. Das Dichtungssegment ist weiterhin endseitig auf Kontakt an der Turbine anliegend. Das Heißgas strömt so vom Brennkammer-Rohrende über das Dichtungssegment in die Turbine. Die Blechkonstruktion ist so ausgelegt, dass sie geringe Relativbewegungen der Turbine, welche in und entgegen der Strömungsrichtung des Heißgases erfolgen, aufnimmt. Die Blechkonstruktion ist mit dem Brennkammer-Endrohr starr verbunden. Die hier aufgezeigten Blechkonstruktionen und das Dichtungssegment erfahren im Betrieb jedoch starke thermische und mechanische Verformungen und damit unzulässige Leckagen und hohen Verschleiß. Dies führt zu einer geringeren Lebensdauer der Blechkonstruktion und des Dichtungssegments und demzufolge häufigen Wartungsarbeiten an der Blechkonstruktion.

Diese Art der Konstruktion bildet daher eine wartungsintensive Schwachstelle im Übergangsbereich zwischen Brennkammer-Rohrende und Turbineneintritt und ist verbesserungswürdig.

Daher ist es die Aufgabe der Erfindung, eine verbesserte Dichtungsanordnung für hohe Temperaturen, insbesondere für die Führung von Heißgas, anzugeben, die sich durch eine geringe Neigung zu Leckagen und langer Betriebslebensdauer auszeichnet. Die Dichtungsanordnung soll in einer Brennkammer für Gasturbinen einsetzbar sein.

Diese Aufgabe wird erfindungsgemäß gelöst durch eine hochtemperaturfeste Dichtungsanordnung mit den Merkmalen des Anspruchs 1.

Die Erfindung geht von der Beobachtung aus, dass bei der oben diskutierten Blechkonstruktion aufgrund der im Betrieb auf die Verbindung (Steckverbindung) ausgeübten Relativbewegungen der Verschleiß sehr hoch ist, was zu hohen Verformungen und häufiger Wartungsintensität aufgrund der geringen Lebensdauer des Dichtungssegments und der Steckverbindung führt. Die Bauteile der Steckverbindung, der Flansch und die Nut, sind zur Befestigung der beiden Bauteile und zum Schutz vor Heißgasaustritt, dicht ineinander gesteckt. Durch das Heißgas verformt sich jedoch die Verbindung, indem sie sich ungleichmäßig ausdehnt. Bei einer Gasturbine beispielsweise entstehen im Betrieb unregelmäßige und in alle Richtungen stattfindende Bewegungen, so zum Beispiel durch die Leitschaufeln. Diese Relativbewegungen übertragen sich so auf das Dichtungssegment und somit auf die Steckverbindungen. Die durch das Heißgas ausgedehnten und nun dicht ineinander greifenden Bauelemente der Steckverbindung verformen sich so durch die Relativbewegung unzulässig. Dies geschieht, indem sich die Bauteile durch die Bewegung aneinander reiben und pressen. Die Bauteile verformen sich durch die Bewegungen und den damit ausgeübten Druck auf die Bauteile sehr stark gegenseitig. Durch die Verformungen entstehen Spalte, durch die Heißgas entweicht. Die Spalte vergrößern sich, je länger die Steckverbindung in Betrieb ist. Dies erfolgt zum einen indem sich die bereits verformten Bauteile im Betriebszustand ausdehnen. Die Bauteile greifen nun nur noch bedingt ineinander, vielmehr entstehen hier bereits wieder Verformungen, welche die bereits entstandenen Spalte vergrößern. Die Folge ist ein immer größerer Heißgasverlust und eine immer geringere Dichtwirkung. Das Dichtungssegment und die Dichtung weisen wegen dieses ungünstigen Zusammenwirkens eine geringe Lebensdauer auf.

Ausgehend von der Erkenntnis dieser Wirkzusammenhänge der Dichtkonstruktion im Stand der Technik wird nunmehr durch die erfindungsgemäße hochtemperaturfeste Dichtungsanordnung die Lebensdauer der Dichtung, und eines damit verbundenen Dichtungssegmentes, beispielsweise eines Ringraums, wesentlich erhöht. Dies erfolgt durch ein flexibles Dichtelement welches zwischen einem Brennkammer-Austrittsabschnitt, und einem Dichtungssegment angebracht ist. Das Dichtungssegment ist flexibel ausgestaltet und zwar dergestalt, dass es Relativbewegungen und thermische Dehnungen kompensiert. Das Dichtungssegment und der Brennkammer-Austrittsabschnitt weisen durch die Anwendung des flexiblen Dichtelements keine starre Verbindung auf, wie sie im Stecksystem des Stands der Technik zur Anwendung kommt. Der unerwünschten Verformung des Dichtelements und der damit verbundenen, unzulässigen Verformung des Dichtungssegments wird durch die flexible Verbindung wirksam entgegengetreten. Durch diese reduzierte Verformung sind Leckagen weitestgehend vermieden. Das flexible Dichtelement erfüllt daher einerseits die Funktion Bewegungen in Form thermischer Dehnungen oder Relativbewegungen, beispielsweise durch die Turbine, aufzunehmen und andererseits die Dichtfunktion selber. Der Verschleiß des Dichtungssegments und der Verbindung des Dichtungssegments am Brennkammer-Austrittsabschnitt ist durch die flexible Dichtung reduziert. Es ergibt sich eine längere Lebensdauer. Die Folge sind längere Wartungsintervalle als bisher.

Bevorzugt ist das flexible Dichtelement auf einer vom Heißgas abgewandten Seite sowohl am Dichtungssegment als auch am Bauteilabschluss angebracht. Hierzu ist beispielsweise ein Flansch an einer vom Heißgas abgewandten Seite am Bauteilabschluss vorgesehen, mit dem das Dichtelement befestigt ist. Dadurch ist das Dichtelement vor unmittelbarer Beaufschlagung mit Heißgas geschützt. Die Gefahr vor Materialschäden, wie sie durch Heißgas entstehen können, ist somit reduziert.

Das Dichtungssegment weist eine Wand auf, welche mit einer Anzahl von Kanälen durchsetzt ist. Diese Kanäle dienen dazu, das Dichtungssegment mit Kühlmedium zu kühlen. So wird das Dichtungssegment vor den heißen Einsatztemperaturen und zusätzlich vor Materialschäden wirkungsvoll geschützt. Die Anzahl und die Anordnung der Kühlkanäle in der Wand sind vorteilhafterweise an die jeweilige Kühlaufgabe angepasst.
Bevorzugt ist die Wand selber durch eine Prallkühlung gekühlt, wofür eine Prallkühleinrichtung vorgesehen ist. Durch die Prallkühlung wird eine Temperaturabsenkung des Dichtelements bewirkt, insofern, dass ein Teil der Wärme an das, auf die Wand unter hohem Druck, aufprallende Kühlmedium abgegeben wird. Dies stellt ebenfalls einen zusätzlichen Schutz vor den hohen Heißgastemperaturen dar, was eine Verlängerung der Lebensdauer bewirkt.

Der Brennkammer-Austrittsabschnitt ist für die Führung von Heißgas ausgelegt. Die hochtemperaturfeste Dichtungsanordnung ist besonders wirkungsvoll in dieser Konstellation. In einer Brennkammer werden heiße Gase gebildet, die nun aufgrund der hochtemperaturfesten Dichtungsanordnung mit vergleichsweise geringem Heißgasverlust weiter geleitet werden.

Bevorzugt ist das flexible Dichtelement dem Brennkammer-Austrittsabschnitt in Strömungsrichtung des heißen Verbrennungsgases nachgeordnet. Das Dichtelement kann in dieser Anordnung die Bewegungen der angrenzenden Bauteile gut abfangen.

In weiterer bevorzugter Ausgestaltung ist das Dichtungssegment für eine Verbindung zwischen Brennkammer - Austrittsabschnitt und einer der Brennkammer nachgeschalteten Turbine ausgelegt. Bevorzugt wird Heißgas so von der Brennkammer über diese Verbindung zu einer Turbine geführt. Das die Turbine durchströmende Heißgas dient zur Energieerzeugung.

Bevorzugt bildet das Dichtungssegment einen Ringraum aus. In diesem wird das in der Brennkammer entstehende Heißgas zur Turbine geführt. In dem Ringraum vermischen sich die aus dem Brennkammer-Austrittsabschnitt austretenden heißen Gase und bilden einen im Wesentlichen homogen durchmischten und damit verbesserten Heißgasstrom. Dadurch ergibt sich eine homogene und definierte Anströmung des Turbineneintritts mit der ersten Leitschaufelreihe.

In weiterer bevorzugter Ausgestaltung ist das Dichtelement aus Metall oder einer metallischen Legierung. Metall oder metallische Legierung sind zum einen temperaturbeständig und weisen zum anderen eine feder-elastische Komponente auf, womit sie sich besonders gut für diese Art der Anwendung eignen.

Bevorzugt ist das flexible Dichtelement als eine E-Dichtung, eine Dog-Bone - Dichtung oder bürstenförmig ausgebildet. In dieser Ausgestaltung kann das Dichtelement thermische und mechanische Bewegungen gut aufnehmen und kompensieren, da bei dieser Art der Dichtung die feder-elastische Komponente sehr hoch ist.

Bevorzugt ist die hochtemperaturfeste Dichtungsanordnung in einer Brennkammer vorgesehen. Dabei kann es sich beispielsweise um eine Can, Can-Annular oder Annular-Brennkammer handeln, wie sie in Gasturbinen vorgesehen sind.

Im Folgenden wird die Erfindung beispielhaft anhand einer Zeichnung näher erläutert.

Darin zeigt in vereinfachter und nicht maßstäblicher Darstellung:
- FIG 1: eine schematische Darstellung einer Gasturbine,
- FIG 2: einen Ringraum mit einer Dichtung nach dem Stand der Technik, sowie
- FIG 3: eine hochtemperaturfeste Dichtungsanordnung gemäß der Erfindung.

Gleiche Teile sind in allen Figuren mit denselben Bezugszeichen versehen.

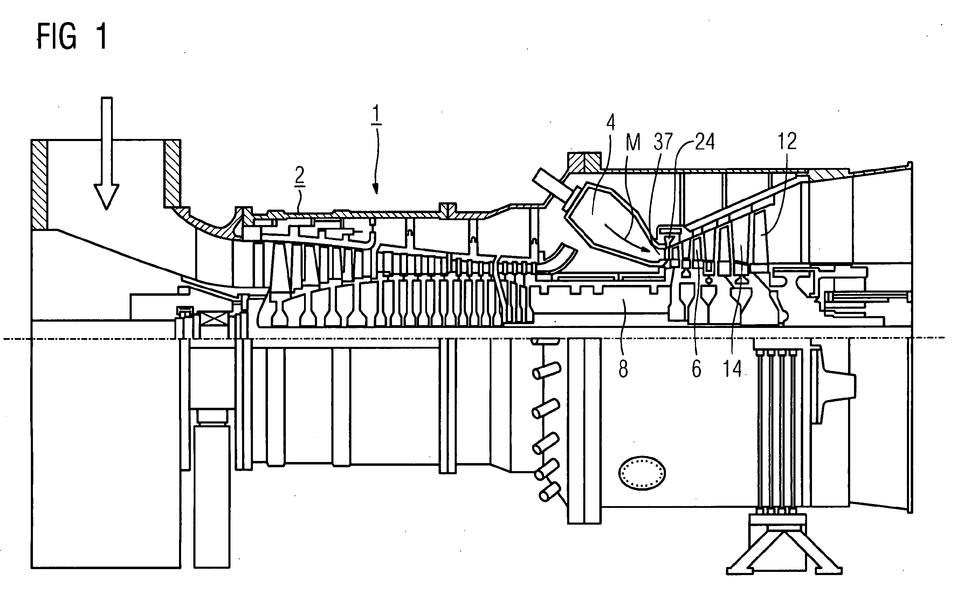

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht näher dargestellten Generators oder einer Arbeitsmaschine auf sowie einen Ringraum 24 zum Überführen des Heißgases M von der Brennkammer 4 zur Turbine 6 auf. Im Verdichter 4 wird zugeführte Luft L verdichtet. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse drehbar gelagert ist. Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14. Die Laufschaufeln 12 dienen zum Antrieb der Turbinenwelle 8 durch Impulsübertrag vom die Turbine 6 durchströmenden heißen Medium, dem Arbeitsmedium, beispielsweise des Heißgases M. Die Leitschaufeln 14 dienen hingegen zur Strömungsführung des Arbeitsmediums beispielsweise des Heißgases M.

Das in der Brennkammer 4 beispielsweise entstehende Heißgas M strömt in Strömungsrichtung 38 von der Brennkammer 4 durch einen Ringraum 24 zu der Turbine 6. In dem Ringraum 24 bildet sich ein im Wesentlichen homogen durchmischter Strom des Arbeitsmediums beispielsweise eines Heißgases M aus. Dabei weist die Brennkammer 4 einen Brennkammer-Austrittsabschnitt 37 auf. Im Betrieb der Turbine 6 und der Brennkammer 4 treten mechanische Relativbewegungen und thermische Dehnungen der Bauteile auf, die sich insbesondere im Bereich der der Verbindung zwischen Brennkammer 4 und Turbine 6 -also dem Ringraum 24- auswirken.

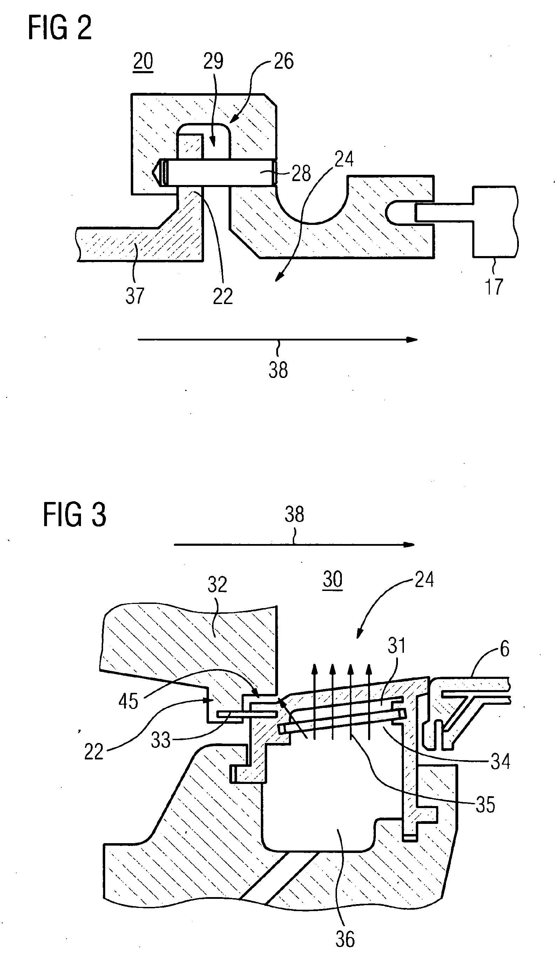

In FIG 2 ist ein Beispiel einer herkömmlichen Dichtungsanordnung, wie sie in Gasturbinen 1 zur Abdichtung des Ringraums 24 verwendet werden, dargestellt. Es handelt sich hierbei um ein Stecksystem 20, das aus einem Brennkammer-Austrittsabschnitt 37 und einem Turbine-Eintrittsabschnitt 17 besteht und einem Ringraum 24 zur Überführung des in der Brennkammer 4 entstehenden Heißgases M in die Turbine 6. Zur Befestigung des Ringraums 24 am Brennkammer-Austrittsabschnitt 37 ist am Brennkammer-Austrittsabschnitt 37 ein Flansch 22 ausgebildet. Der Ringraum 24 weist eine zum Flansch 22 korrespondierende u-förmige Nut 26 auf. Der Flansch 22 ist in die Nut 26 eingebracht. Für die Befestigung und Sicherung der Nut 26 mit dem Flansch 22 ist der Flansch 22 und die Nut 26 mit einem Befestigungsbolzen 28 versehen. Um eine gewisse thermische Ausdehnung im Betrieb zu ermöglichen, ist zwischen dem Flansch 22 und der Nut 26 ein Hohlraum 29 vorgesehen. Die Befestigung mit dem Befestigungsbolzen 28 und die Anordnung des Flansches 22 in der Nut 26 selber ermöglichen jedoch nur geringe thermische Ausdehnungen. Zusätzlich verhindert diese starre und feste Verbindung eine Ausdehnung in alle Richtungen. Dies bewirkt, aufgrund der Relativbewegungen und der thermischen Dehnungen, eine Erhöhung des Verschleiß, der Verformung und demzufolge eine Reduzierung der Lebensdauer des Ringraums 24 und der Verbindung des Ringraums 24 zum Brennkammer-Austrittsabschnitt 37.

In FIG 3 ist dem gegenüber eine hochtemperaturfeste Dichtungsanordnung 30 gemäß der Erfindung dargestellt. Diese weist ein Dichtungssegment 31 und einem mit dem Dichtungssegment 31 verbundenen Bauteilabschluss 32 auf. Der Bauteilabschluss 32 ist durch ein flexibles Dichtelement 33 mit dem Dichtungssegment 31 verbunden. Die hochtemperaturfeste Dichtungsanordnung 30 ist dabei zum Führen von Heißgas M ausgelegt. Das flexible Dichtelement 33 ist bevorzugt aus einer metallischen Legierung oder aus Metall. Es ist damit temperaturbeständig. Gleichzeitig weist es jedoch eine feder-elastische Komponente auf. Das Dichtelement 33 ist bevorzugt als E-Dichtung, Dog-Bone-Dichtung oder bürstenförmig ausgebildet. Dadurch wird die feder-elastische Komponente des Dichtelements 33 erhöht. Das Dichtelement 33 nimmt die beispielsweise durch eine Turbine 6 erzeugten starken Bewegungen auf und kompensiert diese. Gleichzeitig nimmt es die Bewegungen durch die thermischen Dehnungen angrenzender Bauteile auf. Das flexible Dichtelement lässt somit eine Bewegung aller angrenzenden Bauteile in alle Richtungen zu. Dies bewirkt die Reduzierung der Leckagen bei der Verbindung des Dichtungssegments 31 mit dem Bauteilabschluss, insbesondere dem Brennkammer-Austrittsabschnitt.
Zum Anbringen des flexiblen Dichtelements 33 am Bauteilabschluss 32 ist am Bauteilabschluss 32 ein Flansch 22 angebracht, der von der Heißgasseite wegzeigt. Das Dichtungssegment 31 ist so angebracht, dass der Bauteilabschluss 32 einen Teil des Dichtungssegments 31 überdeckt. Das flexible Dichtelement 33 ist am Flansch und auf der Seite des Dichtungssegments 31 in dieser Überdeckung angebracht.

Somit ist das Dichtelement 33 vor direkter Heißgasbeaufschlagung geschützt. Das Dichtungssegment 31 weist weiterhin eine Wand 34 auf, welche mit einer Anzahl von Kühlkanälen 35 durchdrungen ist. Durch diese Kühlkanäle tritt Kühlmedium zur Heißgasseite aus und kühlt somit das Dichtungssegment 31. Das Dichtungssegment 31 ist so gegen Heißgas M geschützt. Zum weiteren Schutz des flexiblen Dichtelements 33 gegen Heißgas M sind eine oder mehrere Kühlkanäle 35 so vorgesehen, dass das ausströmende Kühlmedium ein Eindringen des Heißgases M in eine Spalte 45, welche sich zwischen dem Dichtungssegment 31 und dem, den das Dichtungssegment teilweise überdeckenden Bauteilabschluss 32, ausbildet, verhindert. Gleichzeitig kommt dem flexiblen Dichtelement 33 so eine verstärkte Kühlung zu. Das Kühlmedium ist durch eine Prallkühleinrichtung 36 zuzuführen. Bei der Prallkühleinrichtung 36 trifft das Kühlmedium unter Druck im Wesentlichen senkrecht auf die Wand 34 auf. Dadurch findet ein Temperaturaustausch zwischen der Wand 34 und den Kühlmedium statt. Diese effiziente Kühlmethode bewirkt eine Temperaturabsenkung des Dichtungssegments 31. Das Dichtungssegment 31 bildet einen Ringraum 24 aus. In diesem mischen sich die heißen Gase im Wesentlichen homogen und bilden einen Heißgasstrom aus. Das Dichtelement 33 ist weiterhin dem Bauteilabschluss 32 nachgeordnet. Die Bauteile Turbine 6 und Dichtungssegment 31 liegen auf Kontakt aneinander an. Turbinenbewegungen übertragen sich so auf das Dichtungssegment 31. Diese und die auftretenden thermischen Dehnungen werden vom flexiblen Dichtelement 33 kompensiert, wodurch sich die Lebensdauer deutlich erhöht.
Ein weiterer Vorteil ist die wesentlich einfachere Montage und Demontage des Dichtungssegments 31 gegenüber beispielsweise einem Stecksystem, infolge der einfacheren Konstruktion.

Eine wesentliche Erkenntnis der Erfindung ist die Verringerung der Lebensdauer eines Dichtungssegmentes, welches in einer Gasturbine zwischen einem Brennkammer-Austritt und einer Turbine angeordnet ist, im wesentlich aufgrund der Relativbewegungen der Turbine und der thermischen Dehnungen in Verbindung mit den auftretenden Verformungen durch Heißgas. Die gezielte Kompensierung dieser nachteiligen Verformungen durch ein flexibles Dichtelement, das den Brennkammer-Austritt und das Dichtungssegment verbindet, wirkt sich günstig auf die Lebensdauer des Dichtelements und des Dichtungssegments aus. Der Beitrag der Erfindung für hochtemperaturfeste Dichtungsanordnungen, insbesondere bei Anwendung in einer Gasturbine, weist somit einen großen Vorteil gegenüber üblichen Dichtungsanordnungen auf und stellt eine wesentliche Verbesserung im Hinblick auf Lebensdauer der üblicherweise benutzten Stecksysteme dar.

## Patentansprüche

1. Hochtemperaturfeste Dichtungsanordnung (30) mit einem Bauteilabschluss (32) einer Brennkammer und einem Dichtungssegment (31), wobei das Dichtungssegment mit dem Bauteilabschluss über ein flexibles Dichtelement (33) verbunden ist und das Dichtungssegment (31) zum Führen von Heißgas (M) ausgelegt ist **dadurch gekennzeichnet, dass** das Dichtungssegment (31) eine Wand (34) mit einer Anzahl von Kanälen (35) aufweist, die die Wand (34) durchsetzen (3) und durch die Kühlmedium austritt,
wobei der Bauteilabschluss (32) und das Dichtungssegment (31) sich teilweise überdecken und
wobei das flexibles Dichtelement (33) vor direkter Heißgasbeaufschlagen geschützt ist indem
- das Dichtelement (33) in dieser Überdeckung angebracht ist und
- das ausströmende Kühlmedium ein Eindringen in diese Überdeckung verhindert.

2. Hochtemperaturfeste Dichtungsanordnung (30) nach Anspruch 1, **dadurch gekennzeichnet, dass** das flexible Dichtelement (33) auf einer vom Heißgas abgewandten Seite sowohl am Dichtungssegment (31) als auch am Bauteilabschluss (32) angebracht ist.

3. Hochtemperaturfeste Dichtungsanordnung (30) nach einem der vorhergehenden Ansprüche, **dadurch gekennzeichnet, dass** zur Prallkühlung der Wand (34) eine Prallkühleinrichtung (36) vorgesehen ist.

4. Hochtemperaturfeste Dichtungsanordnung (30) nach einem der vorhergehenden Ansprüche, **dadurch gekennzeichnet, dass** der Bauteilabschluss (32) ein Brennkammer - Austrittsabschnitt (37) ist, welcher zur Führung eines heißen Verbrennungsgases, insbesondere eines Heißengases (M) ausgelegt ist.

5. Hochtemperaturfeste Dichtungsanordnung (30) nach Anspruch 4, **dadurch gekennzeichnet, dass** in Strömungsrichtung (38) des heißen Verbrennungsgases das Dichtungssegment (31) dem Brennkammer - Austrittsabschnitt (37) nachgeordnet ist.

6. Hochtemperaturfeste Dichtungsanordnung (30) nach Anspruch 5, **dadurch gekennzeichnet, dass** das Dichtungssegment (31) für eine Verbindung zwischen Brennkammer - Austrittsabschnitt (37) und einer der Brennkammer (4) nachgeschalteten Turbine (6) ausgelegt ist.

7. Hochtemperaturfeste Dichtungsanordnung (30) nach einem der vorhergehenden Ansprüche, **dadurch gekennzeichnet, dass** das Dichtungssegment (31) einen Ringraum (24) bildet.

8. Hochtemperaturfeste Dichtungsanordnung (30) nach einem der vorhergehenden Ansprüche, **dadurch gekennzeichnet, dass** das Dichtelement aus Metall oder einer metallischen Legierung ist.

9. Hochtemperaturfeste Dichtungsanordnung (30) nach Anspruch 8, **dadurch gekennzeichnet, dass** das Dichtelement eine E-Dichtung, eine Dog-Bone-Dichtung oder bürstenförmig ausgebildet ist.

10. Gasturbine (1), die eine Brennkammer mit einem Bauteilabschluss und eine hochtemperaturfeste Dichtungsanordnung (30) nach einem der vorhergehenden Ansprüche aufweist.

## Claims

1. High-temperature-resistant sealing assembly (30) with a component border (32), a combustion chamber and a sealing segment (31), the sealing segment being connected to the component border via a flexible sealing element (33) and the sealing segment (31) being designed to guide hot gas (M), **characterised in that** the sealing segment (31) has a wall (34) with a number of channels (35) which penetrate (3) the wall (34) and through which cooling medium exits,
the component border (32) and the sealing segment (31) partially overlapping and
the flexible sealing element (33) being protected against direct impact by the hot gas **in that**
- the sealing element (33) is fitted in this overlap and
- the outflowing cooling medium prevents any penetration into this overlap.

2. High-temperature-resistant sealing assembly (30) according to claim 1, **characterised in that** the flexible sealing element (33) is fitted to a side facing away from the hot gas on both the sealing segment (31) and the component border (32).

3. High-temperature-resistant sealing assembly (30) according to one of the preceding claims, **characterised in that** an impact cooling device (36) is provided for impact cooling of the wall (34).

4. High-temperature-resistant sealing assembly (30) according to one of the preceding claims, **characterised in that** the component border (32) is a combustion chamber outlet section (37), which is designed to guide a hot combustion gas, especially a hot gas (M).

5. High-temperature-resistant sealing assembly (30) according to claim 4, **characterised in that** the sealing segment (31) is arranged downstream of the combustion chamber outlet section (37) in the direction of flow (38) of the hot combustion gas.

6. High-temperature-resistant sealing assembly (30) according to claim 5, **characterised in that** the sealing segment (31) is designed to connect the combustion chamber outlet section (37) to a turbine (6) downstream of the combustion chamber (4).

7. High-temperature-resistant sealing assembly (30) according to one of the preceding claims, **characterised in that** the sealing segment (31) forms an annular space (24).

8. High-temperature-resistant sealing assembly (30) according to one of the preceding claims, **characterised in that** the sealing element is made of metal or a metal alloy.

9. High-temperature-resistant sealing assembly (30) according to claim 8, **characterised in that** the sealing element is an E-seal, a dog-bone seal or a brush-shaped seal.

10. Gas turbine (1) which has a combustion chamber with a component border and a high-temperature-resistant sealing assembly (30) according to one of the preceding claims.

## Revendications

1. Dispositif ( 30 ) d'étanchéité résistant aux températures hautes et comprenant une fermeture ( 32 ) d'une chambre de combustion, un segment ( 31 ) d'étanchéité, le segment d'étanchéité étant relié à la fermeture par un élément ( 33 ) d'étanchéité et l'élément ( 31 ) d'étanchéité étant conçu pour conduire du gaz ( M ) chaud, **caractérisé en ce que** le segment ( 31 ) d'étanchéité a une paroi ( 34 ) ayant un certain nombre de canaux ( 35 ) qui traversent la paroi ( 34 ) et par lesquels le fluide de refroidissement sort,
dans lequel la fermeture ( 32 ) et le segment ( 31 ) d'étanchéité se recouvrent en partie et
dans lequel l'élément ( 33 ) d'étanchéité souple est protégé de l'action directe du gaz chaud
- en mettant l'élément ( 33 ) d'étanchéité dans ce recouvrement et
- en empêchant le fluide de refroidissement sortant de pénétrer dans ce recouvrement.

2. Dispositif ( 30 ) d'étanchéité résistant aux températures hautes suivant la revendication 1, **caractérisé en ce que** l'élément ( 33 ) d'étanchéité souple est mis d'un côté éloigné du gaz chaud à la fois sur le segment ( 31 ) d'étanchéité et sur la fermeture ( 32 ).

3. Dispositif (30) d'étanchéité résistant aux températures hautes suivant l'une des revendications précédentes, **caractérisé en ce qu'**un dispositif ( 36 ) de refroidissement par rebondissement est prévu pour refroidir par rebondissement la paroi ( 34 ).

4. Dispositif (30) d'étanchéité résistant aux températures hautes suivant l'une des revendications précédentes, **caractérisé en ce que** la fermeture ( 32 ) est une partie ( 37 ) de sortie d'une chambre de combustion, qui est conçue pour le passage d'un gaz de combustion chaud, notamment d'un gaz ( M ) chaud.

5. Dispositif (30) d'étanchéité résistant aux températures hautes suivant la revendication 4, **caractérisé en ce que** le segment ( 31 ) d'étanchéité est en aval de la partie ( 37 ) de sortie de la chambre de combustion dans le sens ( 38 ) d'écoulement du gaz de combustion chaud.

6. Dispositif ( 30 ) d'étanchéité résistant aux températures hautes suivant la revendication 5, **caractérisé en ce que** le segment ( 31 ) d'étanchéité est conçu pour une liaison entre la partie ( 37 ) de sortie de la chambre de combustion et une turbine ( 6 ) montée en aval de la chambre ( 4 ) de combustion.

7. Dispositif ( 30 ) d'étanchéité résistant aux températures hautes suivant l'une des revendications précédentes, **caractérisé en ce que** le segment ( 31 ) d'étanchéité forme un espace ( 24 ) annulaire.

8. Dispositif ( 30 ) d'étanchéité résistant aux températures hautes suivant l'une des revendications précédentes, **caractérisé en ce que** l'élément d'étanchéité est en métal ou en un alliage métallique.

9. Dispositif ( 30 ) d'étanchéité résistant aux températures hautes suivant la revendication 8, **caractérisé en ce que** l'élément d'étanchéité est une étanchéité en E, une étanchéité dog-bone ou est en forme de balai.

10. Turbine ( 1 ) à gaz, qui a une chambre de combustion ayant une fermeture et un dispositif ( 30 ) d'étanchéité résistant aux températures hautes suivant l'une des revendications précédentes.
